# EUROPEAN PATENT APPLICATION

(11) **EP 3 153 747 A1**
(43) Date of publication of application: **12.04.2017**
(21) Application number: 16002028.5
(22) Date of filing: 19.09.2016
(51) Int. Cl.: F16J 15/12

(54) **VARIABLE COMPRESSION HEIGHT INTEGRATED SEAL**

(30) Priority: 05.10.2015 US 201514875475
(71) Applicant: Caterpillar Inc., Peoria, IL 61629 (US)
(72) Inventor: Sabotta, Christian, Peoria, Illinois 61629-9510 (US); Duncan, Timothy, Peoria, Illinois 61629-9510 (US)
(74) Representative: Boult Wade Tennant

(57) **Abstract**

An integrated seal assembly (16) includes an aperture (24). A carrier (48) includes a generally planar support portion (49) and a contact zone portion (51, 151, 251, 351, 451) formed integral to the support portion. The contact zone portion extends radially of the support portion and terminates adjacent the aperture. A resilient seal portion (50) is formed integrally on at least the contact zone portion and defines the aperture, the resilient seal portion providing an upper support zone (66) and a lower support zone (68) respectively on opposite sides of the assembly.

## Description

### Technical Field

This disclosure relates generally to a sealing construction for providing a fluid seal intermediate a pair of opposed, mating parts or structures.

### Background

As is generally known, an internal combustion engine is a type of engine in which combustion of a fuel with an oxidizer, such as air, occurs in a combustion chamber. The expansion of gases during combustion applies a force on the pistons of the engine, and the chemical energy of the fuel is transformed into mechanical energy. In general, internal combustion engine designs have four circuits of working fluids: (1) combustible air/fuel mixture; (2) exhaust gas; (3) coolant; and (4) motor oil for lubrication. In order to maintain good working order of the engine, it is important that these three working fluids do not intermix and are directed to areas of the engine through various structures in accordance with engineering objectives. It is well known to use seals to properly separate these working fluids. One particularly challenging location to seal is in and around the cylinder head interface with the engine block. A head gasket and/or a seal assembly is disposed between the engine block and the cylinder head and, as such, seals the top of the combustion chamber as well as the fluid passages bored into the cylinder head. In order to address this issue, flexible integrated seals may be attached to the head gasket or seal assembly at the pushrod passageways, for example, to isolate each of the fluid connections between the cylinder block and the cylinder head.

If the seals do not properly seal the fluid passageways, significant problems may result. For example, coolant can leak into the cylinders, which can cause hydrostatic locking of the cylinders and damage the catalytic converter in the exhaust system. These and other problems may damage the engine.

In a newly manufactured engine, certain tolerances are specified, such as the fit of the engine cylinder block to the cylinder head and, in one specific example, the gap therebetween. When engines are remanufactured, the tolerances between parts are often different from those of the original engine because remanufacturing can involve the removal of material. In such situations, it becomes necessary to specify different fittings, gaskets and seals and so on to accommodate the different tolerances.

U.S. Patent No. 7,401,404 (the '404 patent), entitled "Retainer Gasket Construction," is directed to an improved fluid-tight sealing gasket. The '404 patent describes a seal with grooves that are coined or stamped into the metal retainer, upon which a flexible seal element is bonded. Each of the seal elements is molded into the corresponding grooves. The design of the '404 patent, however, relies primarily on the chemical bonding of the seal element onto the metal carrier. Inadequate bonding of the seal element may cause the seal element to detach from the metal carrier, which can result in failure of the seal.

It would be desirable to provide a sealing construction that accommodates different tolerances to reduce the number of parts needed to accomplish the same function in newly constructed and in remanufactured machines alike. Also, it would be desirable to provide a sealing construction that generally accommodates variations in tolerances. Accordingly, there is a need for an improved seal and method for manufacturing such a seal.

It will be appreciated that this background description has been created to aid the reader, and is not to be taken as an indication that any of the indicated problems were themselves appreciated in the art. While the described principles can, in some respects and aspects, alleviate the problems inherent in other systems, it will be appreciated that the scope of the protected innovation is defined by the attached claims, and not by the ability of any disclosed feature to solve any specific problem noted herein.

### Summary

In one aspect, the disclosure describes an integrated seal assembly that includes an aperture. A carrier includes a generally planar support portion and a contact zone portion formed integral to the support portion. The contact zone portion extends radially with respect to the support portion and terminates adjacent the aperture. A resilient seal portion is formed integrally on at least the contact zone portion and defines the aperture, the resilient seal portion providing an upper support zone and a lower support zone respectively on opposite sides of the assembly.

In another aspect, the disclosure provides an assembly that includes a first member including a first passage formed therein terminating in a first port and a second member including a second passage formed therein terminating in a second port. The first member and the second member are configured to be secured together in mating relationship wherein the first port faces the second port when the first and second members are in the mating relationship. An integrated seal assembly is configured to seal between the first member and the second member, the integrated seal assembly including an aperture. A carrier includes a generally planar support portion and a contact zone portion formed integral to the support portion. The contact zone portion extends radially of the support portion and terminates adjacent the aperture and a resilient seal portion integrally formed on at least the contact zone portion and defining the aperture, the resilient seal portion providing an upper support zone and a lower support zone respectively on opposite sides of the assembly.

In other aspects, the contact zone may be non-planar. The contact zone portion may have a first section extending from the support portion that is angled relative to the plane of the support portion and a second section extending from the first section that is generally perpendicular to the plane of the support portion. The contact zone may include a flattened hem. The contact zone may have a thickness that is at least twice the thickness of the support portion of the carrier. The contact zone may be deformable. The contact zone may include a hem. The hem may be one of an open hem, a tear-drop hem, and a rope hem.

In yet another aspect, the disclosure describes a method of manufacturing an integrated seal assembly, including providing a generally planar carrier; forming at least one aperture defined through the generally planar carrier; forming on the carrier a non-planar contact zone adjacent the at least one aperture; and forming a resilient seal portion on the contact zone to define the at least one aperture, wherein the seal portion provides an upper support zone and a lower support zone respectively on opposite sides of the assembly.

In yet other aspects, the disclosure describes that the contact zone may be formed as one of a flattened hem, an open hem, a tear-drop hem, and a rope hem. The contact zone may include a first section extending from the carrier that is angled relative to the plane of the carrier, and a second section extending from the first section that is generally perpendicular to the plane of the carrier. The contact zone may have a thickness that is at least twice the thickness of the carrier.

Further and alternative aspects and features of the disclosed principles will be appreciated from the following detailed description and the accompanying drawings. As will be appreciated, the principles related to an integrated seal assembly disclosed herein are capable of being carried out in other and different aspects, and capable of modification in various respects. Accordingly, it is to be understood that both the foregoing general description and the following detailed description are exemplary and explanatory only and do not restrict the scope of the appended claims.

### Brief Description of the Drawings

FIG. 1 is a perspective and partially exploded view of components of an internal combustion engine with a seal assembly located between the cylinder block and the cylinder head according to an aspect of the disclosure.
FIG. 2 is a plan view of the seal assembly of FIG. 1.
FIG. 3 is a perspective view of a seal assembly according to another aspect of the disclosure.
FIG. 4 is a cross section view of a part of the seal assembly of FIG. 3 including a carrier support portion and a contact zone.
FIGS. 5-7 are cross section views of a contact zone including various hems.
FIGS. 8-10 are cross section views of a contact zone and elastomeric portion including various hems.
FIG. 11 is a cross section view of a part of the seal assembly of FIG. 3 including a carrier support portion and the contact zone of FIG. 7.
FIG. 12 is a cross section view of a part of the seal assembly of FIG. 3 including a carrier support portion and the contact zone of FIG. 7 with a shortened elastomeric portion.

### Detailed Description

Certain terminology may be employed in the following description for convenience rather than for any limiting purpose. For example, the terms "forward" and "rearward," "front" and "rear," "right" and "left," "upper" and "lower," "top" and "bottom," and "right" and "left" designate directions in the drawings to which reference is made, with the terms "inward," "inner," "interior," "inside," or "inboard" and "outward," "outer," "exterior," "outside," or "outboard" referring, respectively, to directions toward and away from the center of the referenced element, the terms "radial" or "vertical" and "axial" or "horizontal" referring, respectively, to directions, axes, or planes perpendicular and parallel to the longitudinal central axis of the referenced element. Terminology of similar import other than the words specifically mentioned above likewise is to be considered as being used for purposes of convenience rather than in any limiting sense.

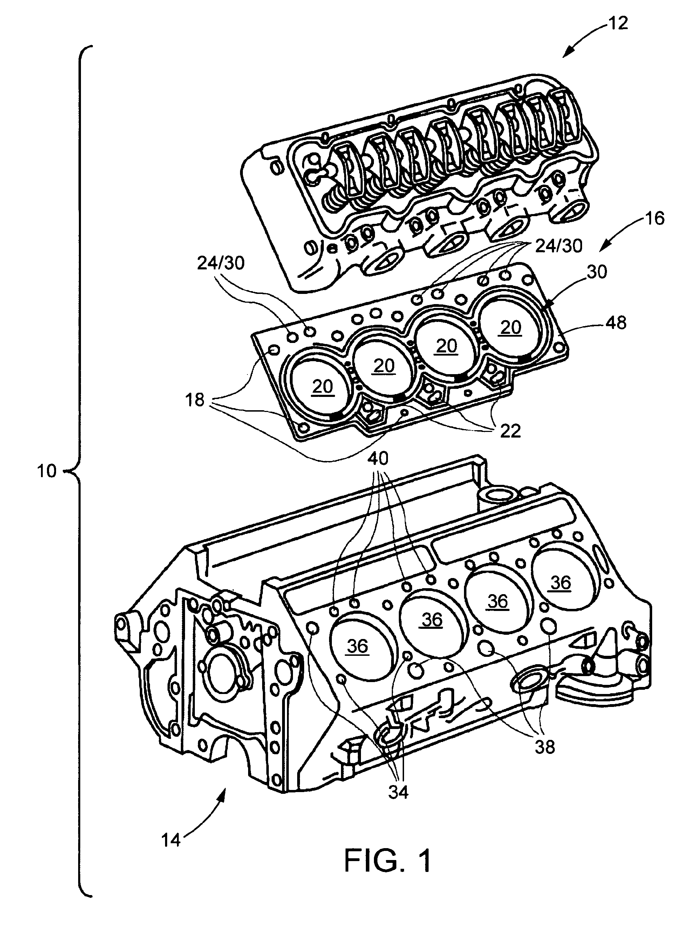

FIG. 1 shows components of an internal combustion engine 10 in accordance with an aspect of the present disclosure. The components of the internal combustion engine 10 include a first member in the form of a cylinder head 12, a second member in the form of a cylinder block 14, and a seal assembly 16. As is generally understood, the seal assembly 16 is disposed between the cylinder head 12 and the cylinder block 14 to form a seal therebetween. The seal assembly 16 may be configured for use in other applications where a fluid-tight seal is desired. For example, the seal assembly 16 may be useful in a hydraulic valve stack, a transmission, a pump and the like.

The seal assembly 16 includes a carrier 48 that is generally, but not limited to a planar configuration and may be formed of a suitable material, for example, aluminum, copper, bronze, steel, such as stainless steel, zinc plated steel, anodized steel, carbon steel, or some other metal or other non-metallic material like a polymeric material. The seal assembly 16 includes a carrier 48 that could be made of layers of materials, for example.

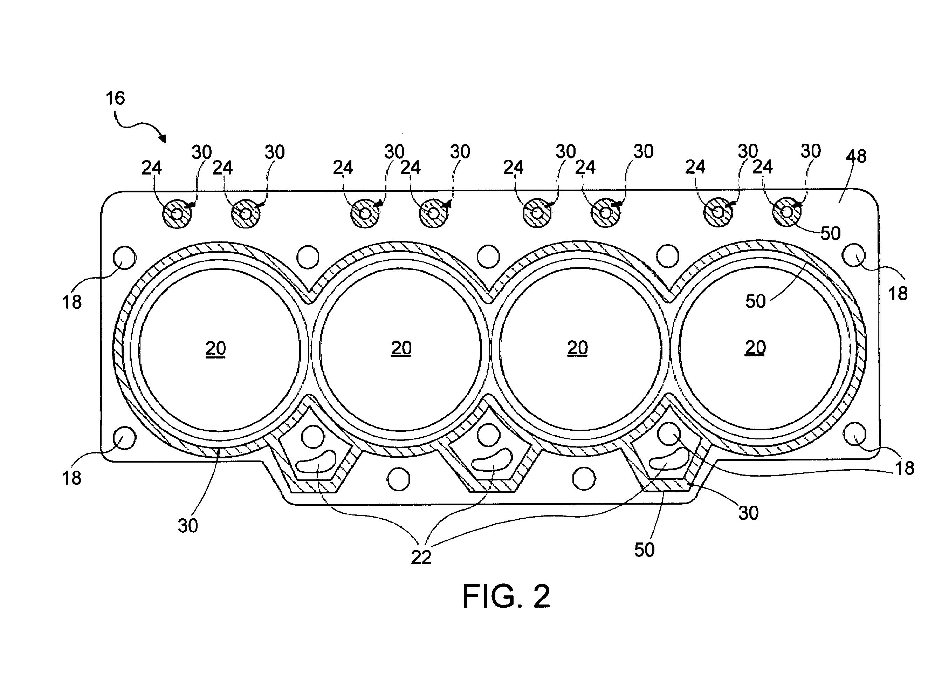

The carrier 48 may include a plurality of bolt passages 18, a plurality of cylinder ports 20, one or more drain ports 22, and a plurality of pushrod ports 24 extending therethrough. Any one or more of these openings formed through the seal assembly 16 may include an associated integrated seal 30 (shown in FIG. 2). For simplifying the disclosure, a particular example will be made in the present figure of one of the openings and the integrated seal 30 associated therewith, but it should be appreciated that other openings may include the integrated seal 30 or a similar structure.

Of note, aspects of the disclosure are not limited to pushrod ports, head gaskets or seal assemblies but, rather, are suitable for use with any seal, opening or passageway that requires sealing. Moreover, although depicted in use with a V-8 engine, it will be readily recognized that this is exemplary and that the teachings of this disclosure can be applied to any type of engine or assembly where seals are employed and to seals utilized in any application requiring sealing of fluids. Further, openings formed through the seal assembly 16, for example, passages 18, ports 20, 22 and 24, may also be generically referred to as apertures or passageways. For the purposes of this disclosure, the terms referring to apertures, passageways and so on can be a hole, slot or passage of any suitable shape and/or size. Examples of suitable shapes include round, oval, rectangular, square, triangular, star shaped, disco-rectangular, and the like.

The cylinder block 14 includes a plurality of threaded bores 34, a plurality of cylinder bores 36, a plurality of drain passages 38, and a plurality of pushrod passages 40. Any of the bores 36 and passages 38, 40 may be generically referred to as passages or ports. The plurality of threaded bores 34 correspond to the plurality of bolt passages 18. The plurality of cylinder bores 36 correspond to the plurality of cylinder ports 20. The plurality of drain passages 38 correspond to the plurality of drain ports 22. The plurality of pushrod passages 40 correspond to the plurality of pushrod ports 24. When assembled, bolts (not shown) extending out from the plurality of threaded bores 34 and passing through the plurality of bolt passages 18 are used to secure the cylinder head 12 to the cylinder block 14 with the seal assembly 16 being sandwiched therebetween. It will be understood that the bores 34 and passages 38, 40 will have corresponding structures in the cylinder head 12.

Turning to FIG. 2, the seal assembly 16 includes a carrier 48 that forms the main body of the seal assembly and extends into the area of each integrated seal 30 to provide structure upon which an elastomeric portion 50 of each integrated seal is disposed, as will be explained in detail below. As noted above, each integrated seal 30 may be sealingly disposed with respect to some or all of the bolt passages 18, cylinder ports 20, drain ports 22, and pushrod ports 24 to facilitate the formation seals about these elements. The bolt passages 18, cylinder ports 20, drain ports 22, and pushrod ports 24 are shaped and placed to communicate with the threaded bores 34, cylinder bores 36, drain passages 38, and pushrod passages 40 of the cylinder block 14 shown in FIG. 1.

The elastomeric portion 50 of the integrated seal 30 may include any suitable material. Examples of suitable materials generally include elastomers and/or deformable materials. The term "elastomeric" or "elastomer" may refer to a material that exhibits rubber-like properties of compliancy, resiliency, compression deflection, low compression set, flexibility, and/or an ability to recover after deformation. More particularly, suitable materials include natural rubbers, thermoplastic rubbers, thermosetting rubbers, vulcanizable rubbers, synthetic rubbers, such as fluoropolymers, chlorosulfonate, polybutadiene, buna-N, butyl, neoprene, nitril, polyisoprene, silicone, or copolymer rubbers such as ethylene propylene diene monomer (EPDM) rubber, nitrile butadiene rubber (NBR), and styrene-butadiene rubber (SBR), or a combination thereof. The term "synthetic rubbers" may also encompass other thermoplastic or thermosetting elastomers such as polyurethanes, silicones, and the like, as well as other polymers that exhibit rubber-like properties such as plasticized nylons, polyesters, ethylene vinyl acetates, etc.

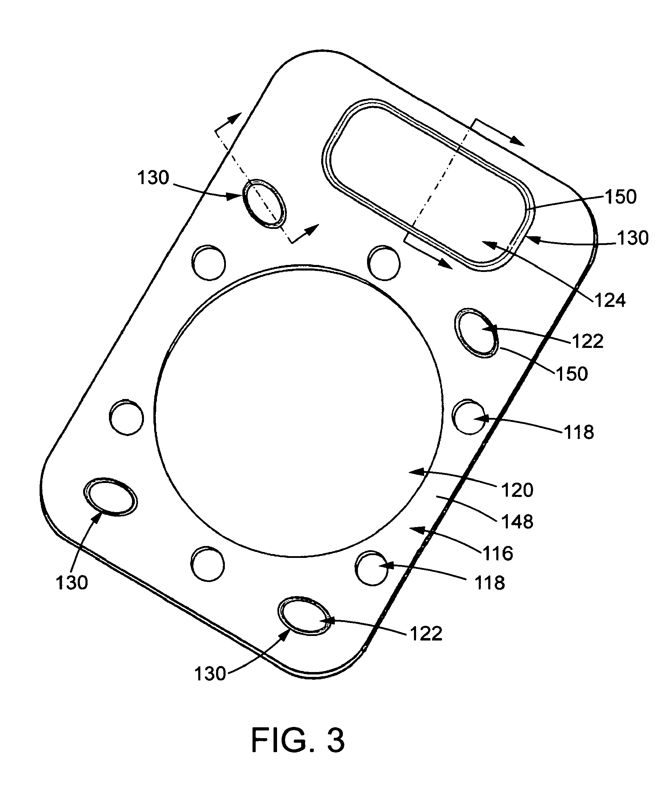

FIG. 3 illustrates another form of a seal assembly 116. The illustrated seal assembly 116 includes a uniformly distributed pattern of bolt passages 118 about a cylinder port 120. A plurality of drain ports 122 are arranged on the seal assembly 116 for passage of fluids therethrough. A pushrod port 124 is disposed along one side of the seal assembly 116. It will be understood that seal assemblies 116 might be provided in a number corresponding to the number of cylinder ports 120 formed in a given engine. In other words, an eight cylinder engine would be provided with eight of the seal assemblies 116 illustrated in FIG. 3. Seal assemblies 116 could be designed to reduce the number of individual assemblies required for a given engine by combining two or more such constructions.

The seal assembly 116 includes a planar carrier 148 that forms the main body of the generally rectangular assembly and connects a plurality of integrated seals 130 that are in turn individually arranged in a sealing position on the carrier with respect to the various passages 118 and ports 120, 122, and 124.

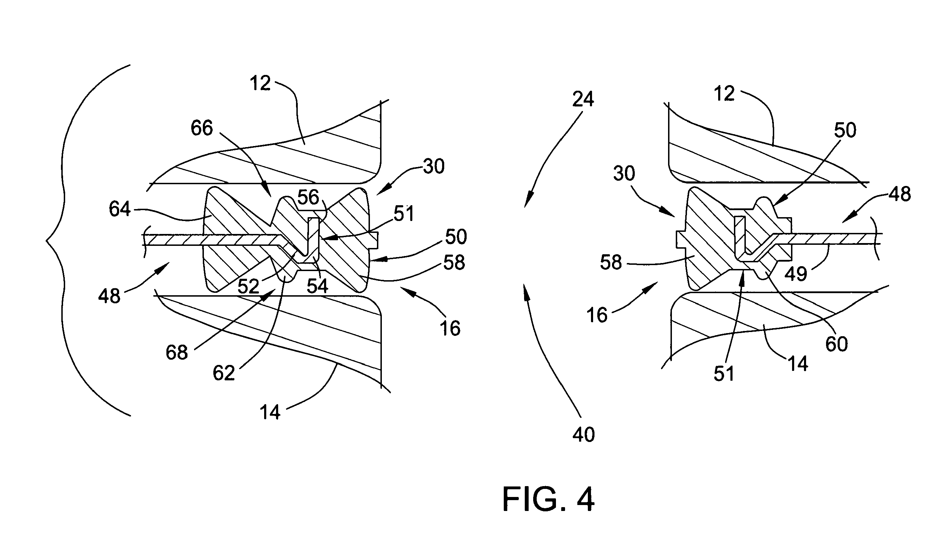

FIG. 4 shows a cutaway cross section of a cylinder head 12 and cylinder block 14 with a seal assembly 16 disposed therebetween. An exemplary opening in the form of a pushrod port 24 is shown formed through the seal assembly 16 and is defined by the integrated seal 30.

According to FIG. 4, the carrier 48 is generally planar. The carrier 48 may be considered to have a support portion 49, which is generally planar and constitutes the major portion of the carrier in terms of total area, and a contact zone 51 that is non-planar and may also be deformable and provide a structural foundation to the integrated seal 30. The elastomeric portion 50 of the integrated seal 30 is integrally formed over and about the contact zone 51 of the carrier 48. The elastomeric portion 50 of the integrated seal 30 may be formed over and about the entire carrier 48.

The elastomeric portion 50 of the integrated seal 30 may be formed on the contact zone 51 of the carrier 48 in any suitable fashion. The elastomeric portion 50 of the integrated seal 30 may be formed so as to position the contact zone 51 at any suitable position in the seal. In general, how the elastomeric portion 50 of the integrated seal 30 is formed on the carrier 48 depends on the material used to make the elastomeric portion 50. For example, rubber or rubber-like materials may be injected or otherwise applied as a viscous liquid and cured via a vulcanizing process. During the vulcanization process of the elastomeric portion 50 of the integrated seal 30, the integrated seal is heated to temperatures and pressures sufficient to vulcanize the material being cured, which may cause the elastomeric portion 50 of the integrated seal to expand. In another example, a thermoset resin may also be applied as a viscous liquid and subjected to heat and/or pressure. In yet another example, a chemically cured polymer may be cured by mixing a monomer with a catalyst, applying the mixture, and allowing the mixture to cure. In these or other examples, a mold or form may be used to obtain a particular geometry of the elastomeric portion 50 of the integrated seal 30. The elastomeric portion 50 of the integrated seal 30 may be attached to the carrier 48 by gluing, mechanical attachment or mechanically integrated thereto.

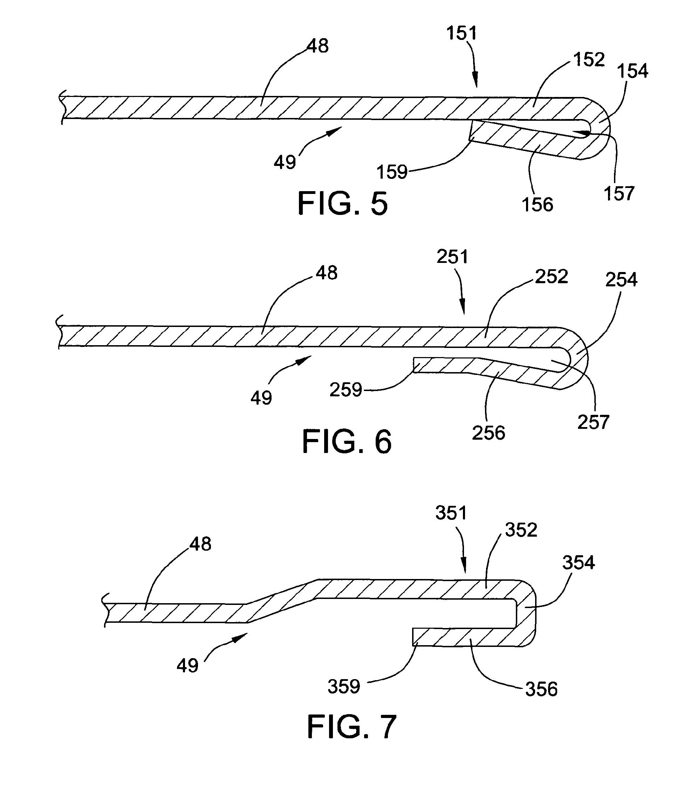

Internally of the elastomeric portion 50 of the integrated seal 30, the carrier 48 transitions from the planar support portion 49 to the contact zone portion 51. The support portion 49 and contact zone portion 51 are formed of the same, one-piece construction, i.e., non-separate pieces. In all aspects, the contact zone portion 51 is non-planar as shown in FIGS. 4-7, and in other aspects, the contact zone portion 51 is also deformable as shown in FIGS. 5-7.

The contact zone portion 51 of the integrated seal 30 may have several functions. The contact zone portion 51 of the carrier 48 may provide deformation during assembly of the engine 10 to accommodate to different gaps/tolerances between the block 14 and the cylinder head 12 and provide height compensation as desired and therefore provide an effective seal therebetween. The contact zone portion 51 of the carrier 48 may provide an increased resistance to radial motion of the elastomeric portion 50 of the seal (left/right in FIG. 4) when loaded, which may cause a loss of adherence between the elastomeric portion 50 and the carrier 48 due to shear and other forces, as can sometimes be the case with a flat carrier. The elastomeric portion 50 of the integrated seal 30 may be formed so as to position the contact zone 51 at any suitable position in the seal.

The integrated seal illustrated in FIG. 4 is a view through line A of FIG. 3, for example, that shows a seal configured to resist lateral motion and shearing of the elastomeric portion 50 due to the morphology of the contact zone portion 51. In particular, the contact zone 51, assuming that the orientation of the plane of the support portion 49 is zero degrees, has a first section 52 that extends from the support portion and angles away from the plane of the support portion at about 45 degrees relative to the support portion. In this aspect, the first section 52 angles downwardly and toward the side of the integrated seal 30 adjacent the block 14. The first section 52 may angle toward the opposite side in another aspect. The exact angle of the first section 52 may be designed to produce a selected deviation from the plane of the support portion 49.

The contact zone 51 changes direction from the first section 52 by way of a bent section 54. The bent section 54 leads to a second section 56 at the terminal end of the contact zone, which has an orientation that is generally perpendicular relative to the plane of the support portion 49 of the carrier 48. The length of the second section 56 depends on the length of the section and deviation produced by the angle of the first section 52.

The elastomeric portion 50 is formed on, and envelops, the contact zone 51 and, optionally, at least an additional area of the support portion 49. The shape and size of the elastomeric portion 50 can be any suitable composition, shape and size to produce an effective seal between the first and second members 12, 14.

FIG. 4 illustrates two aspects of the elastomeric portion 50. In the illustrated examples, the elastomeric portion 50 may have one (not shown), two or three primary beads. As shown on the right side of the figure illustrating two primary beads, the elastomeric portion includes an inner bead 58 proximate the passage 40 and an outer bead 60 positioned distal to the passage. The inner bead 58 may be a wedge or tapered shape in cross section that is widest proximate the passage. The outer bead 60 may be rounded or oval in cross section. The second section 56 may be a vertical terminal extent of the contact zone 51 disposed in a position that is between or intermediate to the inner and outer beads 58, 60. It will be understood that the configuration of beads and overall shape of the elastomeric portion 50 will be consistent about the entire seal 30.

The elastomeric portion 50 may have three beads as illustrated on the left side of the figure, including an inner bead 58 proximate the passage 40 and an outermost bead 64 that is positioned distal to the passage. The inner bead 58 may be a wedge or tapered shape in cross section that is widest proximate the passage. The outermost bead 64 may a wedge or tapered shape in cross section that is widest distal the passage in cross section. The elastomeric portion 50 may include an intermediate bead 62 that is between or intermediate to the inner and outermost beads 58, 64 that may be rounded or oval in cross section. The second section 56 may be a vertical terminal extent of the contact zone 51 disposed in a position that is between or intermediate to the inner and intermediate beads 58, 62. It will be understood that the configuration of beads and overall shape of the elastomeric portion 50 will be consistent about the entire seal 30.

The integrated seal 30, which includes the contact zone 51 and elastomeric portion 50, forms an upper support zone 66 on one side of the seal and a lower support zone 68 opposite the upper support zone. The upper support zone 66 and lower support zone 68 may be annular, generally rectangular, ovoid or any suitable shape to cooperatively seal around a perimeter of a passageway.

FIG. 5 shows another aspect of the support portion 49 and a contact zone 151 of the carrier 48, with the elastomeric portion removed or not yet formed on the seal, to illustrate the contact zone more clearly. In particular, the illustrated contact zone 151 is formed to provide both non-planar and a deformable structure. The contact zone 151 illustrated herein may be referred to as a "tear-drop hem." Thus, the contact zone 151 has a first section 152 that is a planar extension of the support portion 49 of the carrier 48 and lies in the plane of the support portion. A first bend 154 describes an arc of more than 180 degrees and a second section 156 forms the terminus of the contact zone 151. The end 159 of the second section 156 may be brought into contact with the support portion 49 to form an eyelet 157 when viewed in cross section. The eyelet 157 permits the contact zone 151 to deform and provide height compensation as desired between flanking elements. In other words, the eyelet 157 can close to a greater or lesser extent depending on the amount of pressure applied thereto, which itself depends on the tolerance between members respectively positioned on the upper support zone 66 and lower support zone 68 (see FIG. 4). The vertical height (thickness) of the contact zone 151 may be about three times the thickness of the support portion 49 of the carrier 48.

The eyelet 157, in another aspect, may be closed before installation to provide a flattened hem configuration, which would have a vertical height of about two times that of the support portion 49 of the carrier 48. In the flattened configuration, the contact zone 151 would not deform appreciably but would provide an increased resistance to shear of the elastomeric portion of the seal.

FIG. 6 shows another aspect of the support portion 49 and a contact zone 251 of the carrier 48, without an elastomeric portion. In particular, the illustrated contact zone 251 is formed to provide both non-planar and deformable aspects. The contact zone 251 illustrated herein may be referred to as an "open hem" or a "rope hem." Thus, the contact zone 251 has a first section 252 that is a planar extension of the support portion 49 of the carrier 48 and lies in the plane of the support portion. A first bend 254 extends over an arc of more than 180 degrees, when viewed in cross section, and a second section 256 forms the terminus of the contact zone 251. The end 259 of the second section 256 may be brought into contact with the support portion 49 to form an eyelet 257 with a closed configuration or left shy of the first section 252 to provide an eyelet with an open configuration. The eyelet 257 permits the contact zone to deform to provide height compensation as desired. In other words, the eyelet 257 can close to greater or lesser extents depending on the amount of pressure applied thereto, which itself depends on the tolerance between members respectively positioned on the upper support zone 66 and lower support zone 68. The vertical height of the contact zone 251 may be about three times the thickness of the support portion 49 of the carrier 48.

FIG. 7 shows yet another aspect of the support portion 49 and a contact zone 351 of the carrier 48, without an elastomeric portion. In particular, the illustrated contact zone 351 is formed to provide both non-planar and deformable aspects. The contact zone 351 illustrated herein may be referred to as an "open hem." Thus, the contact zone 351 has a first section 352 that is offset from a planar extension of the support portion 49 of the carrier 48 and may be parallel to the plane of the support portion. A first bend 354 describes an arc of about 180 degrees and a second section 356 forms the terminus of the contact zone 351. The end 359 of the second section 356 is spaced from the support portion 49 to form an eyelet 357 to provide an open and generally rectangular configuration. The eyelet 357 permits the contact zone to deform to provide height compensation as desired. In other words, the eyelet 357 can close to greater or lesser extents depending on the amount of pressure applied thereto, which itself depends on the tolerance between members respectively positioned on the upper support zone 66 and lower support zone 68. The vertical height of the contact zone 351 is about three times the thickness of the support portion 49 of the carrier 48.

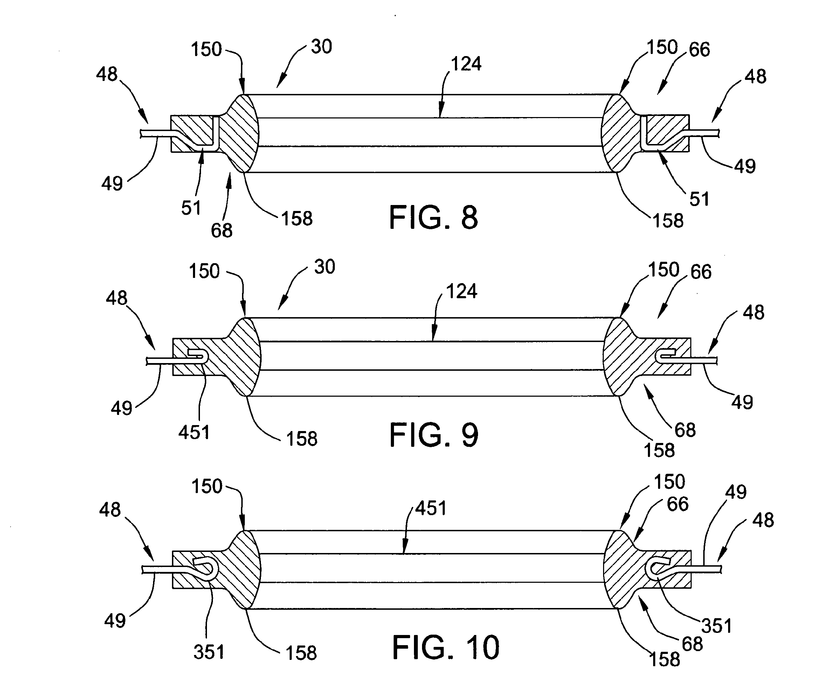

FIG. 8 shows contact zone 51 of FIG. 4 with an elastomeric portion 150 of integrated seal 30. Carrier 48 includes support portion 49 and contact zone 51. The elastomeric portion 150 includes a single inner bead 158 formed on the contact zone 51, wherein the inner bead defines port 124, which may be a push rod port 124 as illustrated in FIG. 3 (see B). Upper support zone 66 is shown at the upper side of seal 30 and lower support zone 68 is shown on the side opposite the upper support zone.

FIG. 9 shows the contact zone 451 with an elastomeric portion 150 according to FIG. 8 of integrated seal 30. The contact zone 451 is in the form of a flattened hem. Carrier 48 includes support portion 49 and contact zone 451. The elastomeric portion 150 includes a single inner bead 158 formed on the contact zone 451, wherein the inner bead and elastomeric portion 150 defines port 124, which may be a push rod port 124 as illustrated in FIG. 3. Upper support zone 66 is shown at the upper side of seal 30 and lower support zone 68 is shown on the side opposite the upper support zone.

FIG. 10 shows a contact zone 351 (see FIG. 7) with the elastomeric portion 150 according to FIG. 8 of integrated seal 30. The contact zone 351 is in the form of an open hem. Carrier 48 includes support portion 49 and contact zone 351. The elastomeric portion 150 includes a single inner bead 158 formed on the contact zone 351, wherein the inner bead and elastomeric portion 150 defines port 124, which may be a push rod port as illustrated in FIG. 3. Upper support zone 66 is shown at the upper side of seal 30 and lower support zone 68 is shown on the side opposite the upper support zone.

Hem structures are used in joining known metallic structures, for example, two or more panels forming a door. The same metal working techniques can be used to form the contact zone portion 51 of the carrier 48 of the present disclosure.

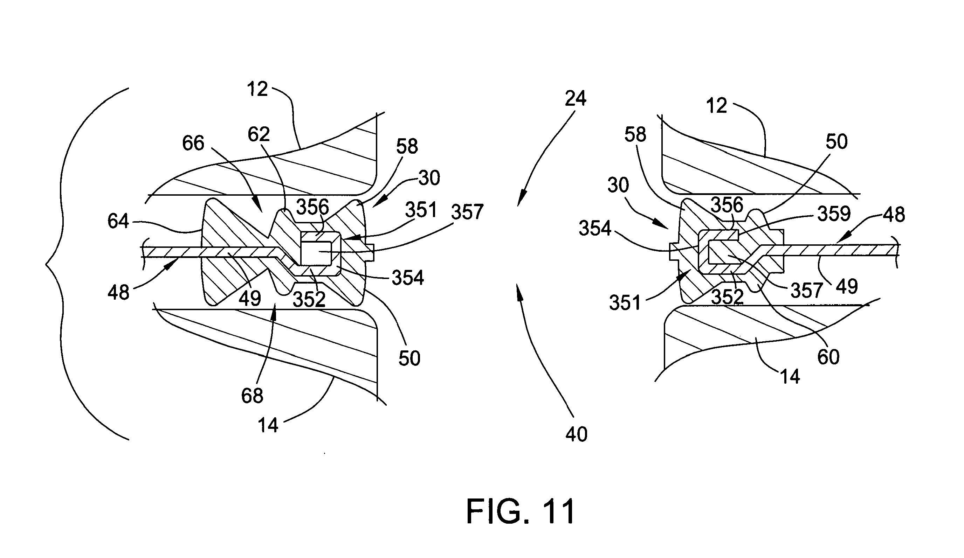

FIG. 11 shows a cutaway cross section of a cylinder head 12 and cylinder block 14 with a seal assembly 16 disposed therebetween like that shown in FIG. 4 with the carrier 48 and contact zone portion 351 configuration shown in FIG. 7. An exemplary opening in the form of a pushrod port 24 is shown formed through the seal assembly 16 and is defined by the integrated seal 30.

In the illustrated aspect, the carrier 48 is generally planar. The carrier 48 may be considered to have a support portion 49, which is generally planar and constitutes the major portion of the carrier in terms of total area, and a contact zone portion 351 that is non-planar and may also be deformable and provide a structural foundation to the integrated seal 30. The elastomeric portion 50 of the integrated seal 30 is integrally formed over and about the contact zone 351 of the carrier 48.

The elastomeric portion 50 of the integrated seal 30 may be formed on the contact zone 351 of the carrier 48 in any suitable fashion as described above.

Internally of the elastomeric portion 50 of the integrated seal 30, the carrier 48 transitions from the planar support portion 49 to the contact zone portion 351. The support portion 49 and contact zone portion 351 are formed of the same, one-piece construction, i.e., non-separate pieces. In all aspects, the contact zone portion 351 is non-planar as shown in FIGS. 4-7, and in other aspects, the contact zone portion 351 may also be deformable as shown in FIGS. 5-7.

The integrated seal illustrated in FIG. 4 is a view through line A of FIG. 3, for example, that shows a seal configured to resist lateral motion and shearing of the elastomeric portion 50 due to the morphology of the contact zone portion 351. In particular, the illustrated contact zone 351 is formed to provide both non-planar and deformable aspects. The contact zone 351 illustrated herein may be referred to as an "open hem." Thus, the contact zone 351 has a first section 352 that is offset from a planar extension of the support portion 49 of the carrier 48 and may be parallel to the plane of the support portion. A first bend 354 describes an arc of about 180 degrees and a second section 356 forms the terminus of the contact zone 351. The end 359 of the second section 356 is spaced from the support portion 49 to form an eyelet 357 to provide an open and generally rectangular configuration. The eyelet 357 permits the contact zone to deform to provide height compensation as desired. In other words, the eyelet 357 can close to greater or lesser extents depending on the amount of pressure applied thereto, which itself depends on the tolerance between members respectively positioned on the upper support zone 66 and lower support zone 68. The eyelet 357 may define a void that is not filled with the elastomer or a space that is filled. The vertical height of the contact zone 351 is about three times the thickness of the support portion 49 of the carrier 48.

The elastomeric portion 50 is formed on, and envelops, the contact zone 351 and, optionally, at least an additional area of the support portion 49. The shape and size of the elastomeric portion 50 can be any suitable composition, shape and size to produce an effective seal between the first and second members 12, 14.

FIG. 11 illustrates two aspects of the elastomeric portion 50. In the illustrated examples, the elastomeric portion 50 may have one (not shown), two or three primary beads. As shown on the right side of the figure illustrating two primary beads, the elastomeric portion includes an inner bead 58 proximate the passage 40 and an outer bead 60 positioned distal to the passage. The inner bead 58 may be a wedge or tapered shape in cross section that is widest proximate the passage. The outer bead 60 may be rounded or oval in cross section. The second section 56 may be a vertical terminal extent of the contact zone 351 disposed in a position that is between or intermediate to the inner and outer beads 58, 60. It will be understood that the configuration of beads and overall shape of the elastomeric portion 50 will be consistent about the entire seal 30.

The elastomeric portion 50 may have three beads as illustrated on the left side of the figure, including an inner bead 58 proximate the passage 40 and an outermost bead 64 that is positioned distal to the passage. The inner bead 58 may be a wedge or tapered shape in cross section that is widest proximate the passage. The outermost bead 64 may a wedge or tapered shape in cross section that is widest distal the passage in cross section. The elastomeric portion 50 may include an intermediate bead 62 that is between or intermediate to the inner and outermost beads 58, 64 that may be rounded or oval in cross section. The second section 56 may be a vertical terminal extent of the contact zone 51 disposed in a position that is between or intermediate to the inner and intermediate beads 58, 62. It will be understood that the configuration of beads and overall shape of the elastomeric portion 50 will be consistent about the entire seal 30. The eyelet 357 may define a void that is not filled with the elastomer (see left side) or a space that is filled (see right side).

The integrated seal 30, which includes the contact zone 351 and elastomeric portion 50, forms an upper support zone 66 on one side of the seal and a lower support zone 68 opposite the upper support zone. The upper support zone 66 and lower support zone 68 may be annular, generally rectangular, ovoid or any suitable shape to cooperatively seal around a perimeter of a passageway.

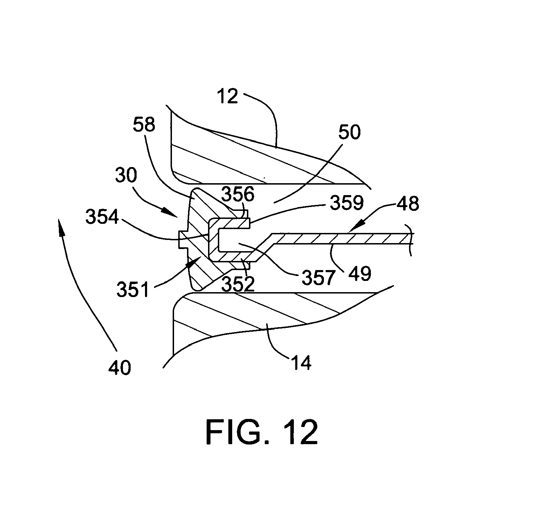

FIG. 12 is similar to FIG. 11, except the elastomeric portion 50 is truncated. Thus, only one bead 58 is formed on the elastomeric portion 50 and it is possible to prevent elastomer filling the void 357 because the elastomer does not enrobe the entire structure of the contact zone 351 of the carrier portion 48. The elements shown that have the same reference characters as those shown in FIG. 11 have the same structure in the present aspect.

### Industrial Applicability

The present disclosure is generally applicable to seals used in any device where seals are conventionally utilized. More particularly, the seal assembly 16 disclosed herein may be applicable in sealing fluid ports, chambers, and housings of mechanical systems such as engines, transmissions, pumps, hydraulic systems, and the like. The engines can be used in power generation, hydraulic fracking, or to power other machinery such as vehicles. Although the disclosure has illustrated the seal assembly 16 for use in an engine, the layered carrier seal assembly 16 can also be adapted for use in other applications where a seal is needed between two metal members and/or interfaces, such as in a hydraulic valve stack, a transmission, or a pump.

Generally, the seal assembly 16 includes an integrated seal 30 formed on a carrier 48 that may be considered to have a support portion 49, which is generally planar and constitutes the major portion of the carrier in terms of total area, and a contact zone 51 that is non-planar and may also be deformable. An elastomeric portion 50 of the integrated seal 30 is integrally formed over and about the contact zone 51 of the carrier 48.

It will be appreciated that the foregoing description provides examples of the disclosed system and technique. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. An integrated seal assembly (16), comprising:
an aperture (24);
a carrier (48) including a generally planar support portion (49) and a contact zone portion (51, 151, 251, 351, 451) that is formed integral to the support portion, wherein the contact zone portion extends radially of the support portion and terminates adjacent the aperture; and
a resilient seal portion (50) integrally formed on at least the contact zone portion and defining the aperture, the resilient seal portion providing an upper support zone (66) and a lower support zone (68) respectively on opposite sides of the assembly.

2. The assembly of claim 1, further comprising:
a first member (12) including a first passage formed therein terminating in a first port; and
a second member (14) including a second passage (40) formed therein terminating in a second port (40), the first member and the second member configured to be secured together in mating relationship wherein the first port faces the second port when the first and second members are in the mating relationship;
wherein the integrated seal assembly (16) is configured to seal between the first member (12) and the second member (14).

3. The assembly (16) of claim 1 or claim 2, wherein the contact zone portion (51, 151, 251, 351, 451) is non-planar.

4. The assembly (16) of claim 1 or claim 3, wherein the contact zone portion (51, 151, 251, 351, 451) has a first section (52) extending from the support portion (49) that is angled relative to the plane of the support portion and a second section (54) extending from the first section that is generally perpendicular to the plane of the support portion.

5. The assembly (16) of claim 1 or claim 3, wherein the contact zone portion (451) comprises a flattened hem.

6. The assembly (16) of claim 1 or claim 3, wherein the contact zone portion (51, 151, 251, 351, 451) has a thickness that is greater than a thickness of the support portion (49) of the carrier (48).

7. The assembly (16) of claim 1 or claim 6, wherein the contact zone portion (151, 251, 351) is deformable.

8. The assembly (16) of claim 1 or claim 7, wherein the contact zone portion (151, 251, 351, 451) comprises a hem.

9. The assembly (16) of claim 1 or claim 8, wherein the hem is one of an open hem (351), a tear-drop hem (151), and a rope hem (251).

10. A method of manufacturing an integrated seal assembly (16), comprising:
providing a carrier (48);
forming at least one aperture through the carrier (48);
forming on the carrier (48) a non-planar contact zone (51, 151, 251, 351, 451) adjacent the at least one aperture; and
forming a resilient seal portion (50) on the contact zone to define the at least one aperture, wherein the seal portion provides an upper support zone (66) and a lower support zone (68) respectively on opposite sides of the assembly.

11. The method of claim 10, wherein the contact zone is formed as one of a flattened hem (451), an open hem (351), a tear-drop hem (151), and a rope hem (251).

12. The method of claim 10, wherein the contact zone comprises a first section (52) extending from the carrier (48) that is angled relative to the plane of the carrier and a second section (56) extending from the first section that is generally perpendicular to the plane of the carrier (48).

13. The method of claim 10, wherein the contact zone (51, 151, 251, 351, 451) has a thickness that is a greater thickness than a thickness of the carrier (48).

14. The method of any of claims 10-13, further comprising:
providing a first member (12) including a first passage formed therein terminating in a first port;
providing a second member (14) including a second passage formed therein terminating in a second port (40),
disposing the integrated seal assembly (16) between the first member and the second member; and
securing together the first member and the second member in mating relationship on opposite sides of the integrated seal assembly (16) wherein the first port faces the second port when the first and second members are in the mating relationship.
